# EUROPEAN PATENT APPLICATION

(11) **EP 4 379 491 A1**
(43) Date of publication of application: **05.06.2024**
(21) Application number: 23205822.2
(22) Date of filing: 25.10.2023
(51) Int. Cl.: G05D 1/65

(54) **SHIP CONTROL SYSTEM, CONTROL METHOD, AND CONTROL PROGRAM FOR SHIP CONTROL SYSTEM**

(30) Priority: 25.10.2022 JP 2022170898
(71) Applicant: Nabtesco Corporation, Tokyo 102-0093 (JP); Tokyo Keiki Inc., Tokyo 144-8551 (JP)
(72) Inventor: Kawatani, Toru, Tokyo, 102-0093 (JP); Tanaka, Hiroki, Tokyo, 102-0093 (JP); Sakakibara, Takatsugu, Tokyo, 102-0093 (JP); Kawasaki, Naoyuki, Tokyo, 102-0093 (JP); Yamaguchi, Ryo, Tokyo, 144-8551 (JP); Uetake, Hironobu, Tokyo, 144-8551 (JP); Shimada, Naoki, Tokyo, 144-8551 (JP); Abe, Kenta, Tokyo, 144-8551 (JP)
(74) Representative: Grünecker Patent- und Rechtsanwälte PartG mbB

(57) **Abstract**

A ship control system (10) of one embodiment includes: a main engine controller (18) performs, when controlling the rotational frequency of a main engine (74) based on a target ship speed of a ship (1), feedback control of an actual ship speed of the ship (1) to perform ship speed control for bringing the actual ship speed closer to the target ship speed; a turning judgment unit (21) judges whether or not the ship (1) will turn; and a control change unit (22) performs, when the turning judgment unit (21) has judged that the ship (1) will turn, lowering processing for lowering the responsiveness of the ship speed control.

## Description

### BACKGROUND OF THE INVENTION

### 1. Field of the Invention

The present invention relates to a ship control system, a control method for a ship control system, and a control program for a ship control system.

### 2. Description of the Related Art

For example, Patent Literature 1 describes a ship control system that includes a propelling device mounted on a ship, and a controller for controlling the propulsion of the propelling device. This system includes an auto-cruise command device, a device for setting a target ship speed, and a device for detecting the actual ship speed of the ship. The controller controls the propulsion of the propelling device so that the difference between the target ship speed and the actual ship speed falls within a predetermined speed range. The controller performs control with propulsion different from that in normal times when an interrupt condition is satisfied.

Patent Literature 1: Japanese Unexamined Patent Application Publication No. 2017-094945

### SUMMARY OF THE INVENTION

In Patent Literature 1, a proposal is made to increase the main engine torque during ship speed control, upon detection of the rudder being operated or detection of the yaw rate of the ship. Since a fluctuation of the main engine load affects the turning speed, unnecessary rudder operation is required when an autopilot is used. Also, the ship speed control and the rudder angle control may interfere with each other during turning, which may cause unnecessary load fluctuations on the main engine. Such load fluctuations on the main engine may lead to increased fuel consumption of the main engine.

The present invention has been made in view of such an issue, and a purpose thereof is to provide a technology for a ship control system capable of reducing unnecessary load fluctuations on the main engine during turning.

In response to the above issue, a ship control system according to one embodiment of the present invention includes: a main engine controller that performs, when controlling the rotational frequency of a main engine based on a target ship speed of a ship, feedback control of an actual ship speed of the ship to perform ship speed control for bringing the actual ship speed closer to the target ship speed; a turning judgment unit that judges whether or not the ship will turn; and a control change unit that performs, when the turning judgment unit has judged that the ship will turn, lowering processing for lowering the responsiveness of the ship speed control.

Optional combinations of the above, and implementation of the present invention, including the constituting elements and expressions, in the form of methods, apparatuses, programs, transitory or non-transitory storage medium storing programs, or systems may also be practiced as additional modes of the present invention.

### BRIEF DESCRIPTION OF THE DRAWINGS

Embodiments will now be described, by way of example only, with reference to the accompanying drawings which are meant to be exemplary, not limiting, and wherein like elements are numbered alike in several FIGURES, in which:
FIG. 1 schematically illustrates a ship to which a ship control system according to a first embodiment of the present invention is applied;
FIG. 2 is a schematic block diagram of the ship control system shown in FIG. 1;
FIG. 3 shows transition of ship speed fluctuations due to interference between ship speed control and rudder angle control during turning;
FIG. 4 is a timing chart that shows changes in ship speed in a modification of the ship speed control; and
FIG. 5 is a flowchart that shows an example of operation of the ship control system shown in FIG. 1.

### DETAILED DESCRIPTION OF THE INVENTION

In the embodiments disclosed in the present specification, when an object is constituted by multiple objects, the multiple objects may be integrated together, and, conversely, an object constituted by a single object may be divided into multiple objects. Regardless of whether the objects are integrated or not, configurations have only to be made such that a purpose of the invention can be achieved.

In the embodiments disclosed in the present specification, when multiple functions are provided in a distributed manner, some or all of the multiple functions may be collectively provided, and, conversely, when multiple functions are collectively provided, some or all of the multiple functions may be provided in a distributed manner. Regardless of whether the functions are aggregated or distributed, configurations have only to be made such that a purpose of the invention can be achieved.

Also, separate constituting elements having a feature in common may be distinguished from each other by adding "first, second" or the like at the beginnings of the names thereof, and such words may be omitted when the constituting elements are collectively referred to. Further, terms including ordinal numbers, such as "first" and "second", are used to describe various constituting elements. However, such terms are used only to distinguish one constituting element from another and do not limit the constituting elements.

A ship control system according to one embodiment includes: a main engine controller that performs, when controlling the rotational frequency of a main engine based on a target ship speed of a ship, feedback control of an actual ship speed of the ship to perform ship speed control for bringing the actual ship speed closer to the target ship speed; a turning judgment unit that judges whether or not the ship will turn; and a control change unit that performs, when the turning judgment unit has judged that the ship will turn, lowering processing for lowering the responsiveness of the ship speed control.

With this configuration, the lowering processing can be performed when a ship turns. As a result, unnecessary load fluctuations of the main engine during turning can be reduced, and an increase in fuel consumption can be suppressed.

As an example, in the lowering processing, when it is judged that the ship will turn, the ship speed control is stopped, and control is performed such as to maintain the rotational frequency of the main engine at the time of the judgment. In this case, the lowering processing can be performed by stopping the ship speed control.

As an example, in the lowering processing, loop gain of the feedback control is made smaller than that before it is judged that the ship will turn. In this case, the lowering processing can be performed by reducing the loop gain.

As an example, the turning judgment unit judges whether or not the ship will turn using an actual rudder angle of the ship. In this case, whether or not the ship will turn can be easily judged using the actual rudder angle.

As an example, when the actual rudder angle of the ship becomes equal to or smaller than a predetermined value during the lowering processing, the turning judgment unit judges that the turning of the ship has been finished. In this case, the finish of turning can be easily judged using the actual rudder angle.

As an example, the turning judgment unit judges whether or not the ship will turn using a result of comparison between a target rudder angle and the actual rudder angle of the ship. In this case, since the judgment can be made in advance using the comparison result regarding the rudder angle, the lowering processing can be started earlier. Therefore, load fluctuations of the main engine during turning can be suppressed.

As an example, the turning judgment unit judges turning of the ship further using disturbance information including at least one of the speed of a tidal current near the ship, the direction of a tidal current near the ship, the wind speed near the ship, or the wind direction near the ship. In this case, since the judgment can be made in advance using the disturbance information, the lowering processing can be started earlier. Therefore, load fluctuations of the main engine during turning can be suppressed.

As an example, when the turning judgment unit has judged, during the lowering processing, that turning of the ship was finished, the control change unit disables the lowering processing. In this case, after turning of the ship is finished, the ship speed control can be returned from the lowering processing mode to the normal mode.

As an example, the turning judgment unit judges whether or not the ship will turn using an actual ship position of the ship and a way point on a navigation plan of the ship. In this case, even if there is a delay from when the rudder is operated until when the influence on the actual ship speed appears in the ship, the lowering processing can be started earlier, so that load fluctuations of the main engine during turning can be suppressed.

As an example, using an actual ship position, the actual ship speed, and the target ship speed of the ship and a way point on a navigation plan of the ship, the turning judgment unit estimates a scheduled time at which the ship reaches the way point and judges that the ship will turn a predetermined period of time before the scheduled time. In this case, since the turning judgment can be made when the ship approaches a way point, the lowering processing can be started earlier.

In the following, the present invention will be described based on preferred embodiments with reference to each drawing. In the embodiments and modifications, like reference characters denote like or corresponding constituting elements and members, and the repetitive description will be omitted as appropriate. Also, the dimensions of a member may be appropriately enlarged or reduced in each drawing in order to facilitate understanding. Further, in each drawing, part of a member less important in describing embodiments may be omitted.

### First Embodiment

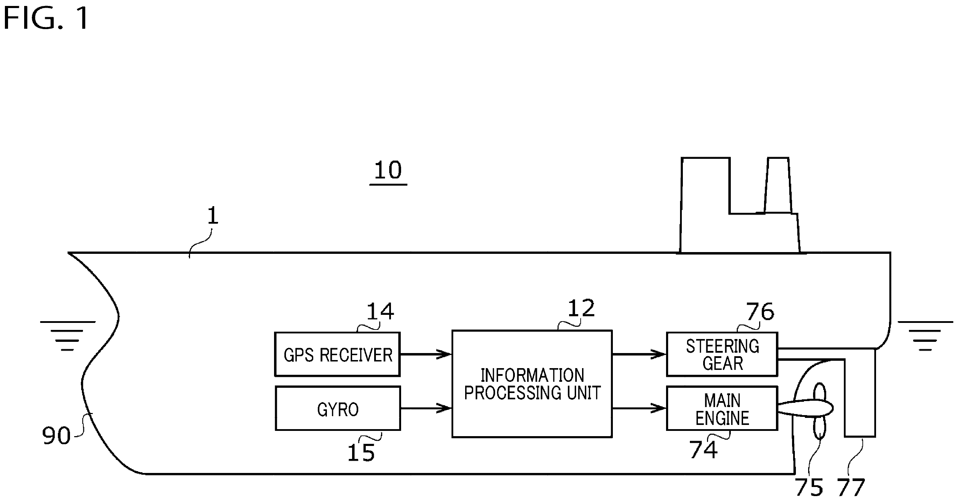

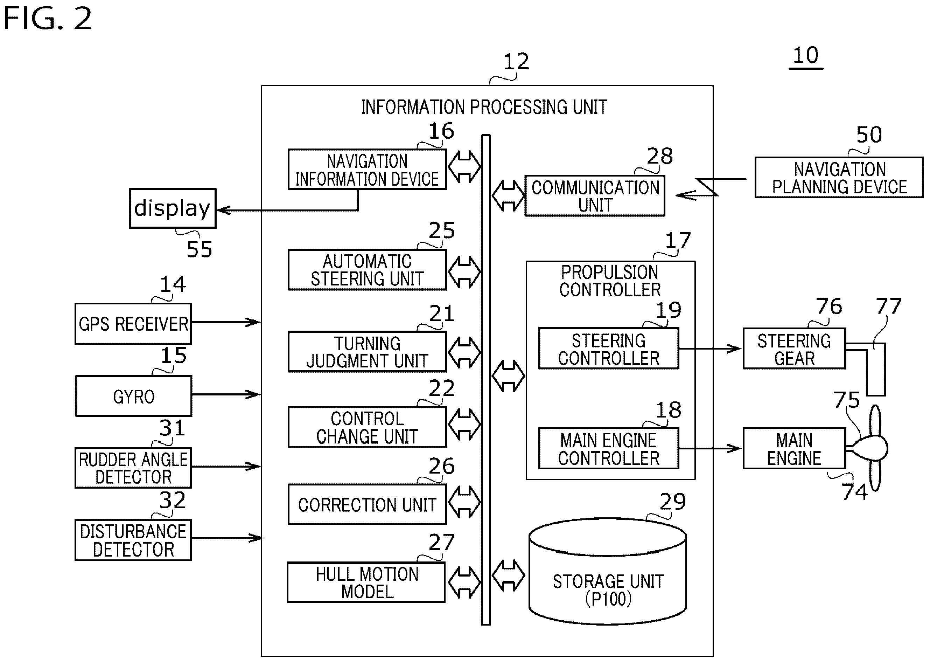

In the following, a ship control system 10 according to the first embodiment of the present invention will be described with reference to FIGS 1-5. FIG. 1 schematically illustrates the ship control system 10 according to the first embodiment of the present invention. FIG. 2 is a schematic block diagram of the ship control system 10.

Each block shown in the block diagram of FIG. 2 can be implemented by an element, such as a processor, a CPU, or memory of a computer, an electronic circuit, or a mechanism in terms of hardware, and by a computer program or the like in terms of software. FIG. 2 illustrates functional blocks implemented by coordination of those components. Therefore, it will be understood by those skilled in the art that these functional blocks may be implemented in a variety of forms by combinations of hardware and software.

In the embodiment, a ship 1 includes a hull 90, an information processing unit 12, a main engine 74, a steering gear 76, a GPS receiver 14, and a gyro 15. The ship control system 10 is provided in the ship 1. The main engine 74 is an engine that propels the ship 1 and is a propulsion mechanism that rotates a propeller 75 to generate propulsion for propelling the hull 90. The main engine 74 has only to be capable of propelling the hull 90 and is a diesel engine in this example. The main engine 74 consumes an amount of fuel corresponding to the rotational frequency and torque of the main engine 74 in order to operate the main engine 74. The main engine 74 may be provided with a governor, not illustrated, that fine-tunes the fuel input in order to suppress fluctuations in rotational speed in response to load changes in the main engine 74.

The steering gear 76 is a power steering mechanism that rotates a rudder 77 provided on the hull to turn the ship 1. The steering gear 76 changes the rudder angle using power from a power source, such as a hydraulic actuator or an electric motor. The steering gear 76 includes a rudder angle detector 31 that detects the actual rudder angle. The rudder angle detector 31 provides the actual rudder angle thus detected to the information processing unit 12.

The GPS receiver 14 calculates the current position of the receiver using satellite radio waves and provides the calculated current position as the actual ship position to the information processing unit 12. The GPS receiver 14 has only to be capable of calculating the current position of the receiver using satellite radio waves and is not limited to any particular system. The GPS receiver 14 of the embodiment is a global positioning system that receives positioning signals from several satellites in the sky among multiple satellites and calculates the current position of the receiver. The gyro 15 acquires the attitude of the ship 1, identifies the actual bow direction of the ship 1 from the acquired attitude, and provides the actual bow direction to the information processing unit 12.

The information processing unit 12 mainly includes a navigation information device 16, an automatic steering unit 25, a turning judgment unit 21, a control change unit 22, a correction unit 26, a communication unit 28, a propulsion controller 17, and a storage unit 29. The communication unit 28 transmits and receives information to and from outside the ship 1. The storage unit 29 stores the target ship speed, actual ship speed, target rudder angle, actual rudder angle, and the like in chronological order. The storage unit 29 also stores a control program P100 for the ship control system 10. In the present specification, ship speed such as the target ship speed and actual ship speed may be the ship speed over the ground, may be the ship speed through the water, or may be the rotational speed of the main engine 74.

The turning judgment unit 21 judges whether or not the ship 1 will turn (hereinafter, it may be referred to as "turning judgment"). The turning judgment unit 21 also judges whether or not turning of the ship 1 has been finished (hereinafter, it may be referred to as "finish judgment"). When the turning judgment unit 21 has judged that the ship 1 will turn, the control change unit 22 performs lowering processing to lower the responsiveness of the ship speed control. Also, when the turning judgment unit 21 has made the finish judgment, the control change unit 22 disables the lowering processing.

The correction unit 26 provides, to the main engine controller 18, correction information for correcting the rotational frequency of the main engine 74 using a hull motion model 27. The turning judgment unit 21, control change unit 22, and correction unit 26 will be detailed later.

Based on a navigation plan, the navigation information device 16 acquires the current position of the ship 1 (hereinafter, it may be referred to as the "actual ship position"), the destination position, a way point on the route from the actual ship position to the destination position, the scheduled arrival time, the route, and the target ship speed to generate marine chart information and displays the marine chart information on a display 55. The navigation information device 16 can acquire the navigation plan in advance before the start of the navigation of the ship 1. Also, during the navigation of the ship 1, the navigation information device 16 can acquire the navigation plan based on weather routing in which weather and marine information is taken into account, from a navigation planning device 50 provided on land and via the communication unit 28.

The navigation information device 16 of the embodiment includes the Electronic Chart Display and Information System (ECDIS). As an example, the navigation information device 16 receives the actual ship position and the actual bow direction from the GPS receiver 14 and the gyro 15. Also, as an example, the display 55 displays information such as a way point and the scheduled passing time thereof, the actual ship position, and the actual bow direction.

The navigation information device 16 in this example is capable of calculating the current ship speed (hereinafter, referred to as the "actual ship speed") by differentiating a change in the actual ship position with respect to time and also calculating the target ship speed and a target bow direction required to pass the next way point at the scheduled passing time thereof. The navigation information device 16 provides, to the propulsion controller 17, the actual ship position, actual bow direction, actual ship speed, target ship speed, target bow direction, and the position of a way point. In particular, the actual ship speed and the target ship speed are provided to the main engine controller 18. The navigation information device 16 also provides the target bow direction to the automatic steering unit 25.

In this example, the automatic steering unit 25 functions as an autopilot. The automatic steering unit 25 calculates the target bow direction and target rudder angle using information regarding the next way point provided by the navigation information device 16. As an example, the automatic steering unit 25 may calculate the target rudder angle by controlling the rudder 77 so that the bow always points to the next way point (Heading Control), or by tracing an assumed route to the next way point (Tracking Control), for example. The automatic steering unit 25 provides the target rudder angle thus calculated to the steering controller 19.

The propulsion controller 17 includes the main engine controller 18 that controls the main engine 74, and the steering controller 19 that controls the steering gear 76. Using the provided target ship speed, the main engine controller 18 controls the rotational frequency of the main engine 74 of the ship 1 and performs ship speed control for bringing the actual ship speed of the ship 1 closer to the target ship speed. The ship speed control may include, for example, feedback control of calculating the deviation of the actual ship speed from the target ship speed and controlling the main engine 74 so as to eliminate the deviation.

The rudder angle detector 31 detects the actual rudder angle of the rudder 77 and provides the actual rudder angle to the information processing unit 12. Using the provided target rudder angle and the actual rudder angle, the steering controller 19 controls the steering gear 76 of the ship 1 and performs rudder angle control for bringing the actual rudder angle of the rudder 77 closer to the target rudder angle. The rudder angle control may include, for example, feedback control of calculating the deviation of the actual rudder angle from the target rudder angle and controlling the steering gear 76 so as to eliminate the deviation.

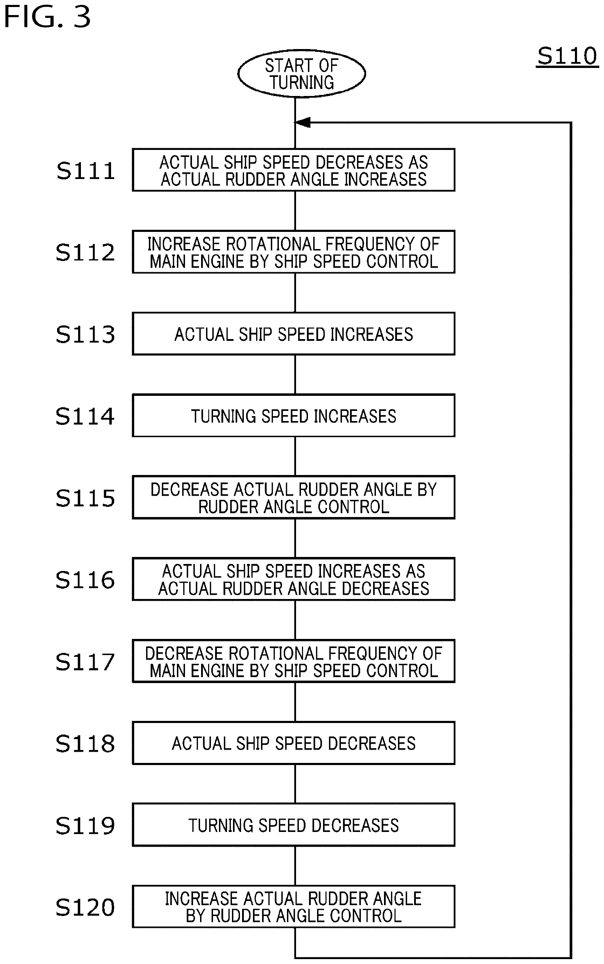

The inventors have found that, when the ship 1 turns at a way point, unnecessary ship speed fluctuations (hereinafter, referred to as "ship speed fluctuations during turning") occur due to interference between the ship speed control and the rudder angle control. The ship speed fluctuations during turning will be described with reference to FIG. 3 that shows an example of the ship speed fluctuations during turning.

When the ship 1 approaches a way point and the rudder 77 is operated to start turning, the actual rudder angle increases. When the actual rudder angle increases, the propulsion resistance due to the rudder operation also increases, so that the actual ship speed decreases (Step 5111) .

When the actual ship speed decreases during turning, the main engine controller 18 increases the rotational frequency of the main engine 74 so as to correct the decrease in the actual ship speed by ship speed control (Step S112). When the rotational frequency of the main engine 74 increases, the actual ship speed also increases (Step S113). As a result, the steerage is improved, so that the turning speed of the ship 1 increases (Step S114) . Accordingly, the automatic steering unit 25 decreases the target rudder angle to correct the increase in the turning speed.

When the target rudder angle decreases, the steering controller 19 decreases the actual rudder angle by rudder angle control (Step S115). When the actual rudder angle decreases, the propulsion resistance due to the rudder operation also decreases, so that the actual ship speed increases (Step S116) .

When the actual ship speed increases, the main engine controller 18 decreases the rotational frequency of the main engine 74 so as to correct the increase in the actual ship speed by ship speed control (Step S117). As a result, the actual ship speed decreases, and the actual speed of the ship 1 during turning decreases (Step S118).

When the actual speed during turning decreases, the steerage is worsened, so that the turning speed of the ship 1 decreases (Step S119). When the turning speed decreases, the automatic steering unit 25 increases the target rudder angle to correct the decrease in the turning speed. When the target rudder angle increases, the steering controller 19 increases the actual rudder angle by rudder angle control (Step S120). When the actual rudder angle increases, the loop returns to Step S111, and Steps S111 to S120 are repeated.

Thus, during turning, the ship speed control and the rudder angle control of the ship 1 interfere with each other, so that the ship speed fluctuations during turning occur, in which ship speed fluctuations and rudder angle fluctuations are repeated. In a situation where acceleration and deceleration are repeated due to the ship speed fluctuations during turning, fuel is unnecessarily consumed for the acceleration and deceleration of the main engine 74. Also, the route of the ship 1 during turning is not stable.

In order to suppress the ship speed fluctuations during turning, the ship control system 10 includes the turning judgment unit 21 that judges whether or not the ship 1 will turn, and the control change unit 22 that performs lowering processing for lowering the responsiveness of the ship speed control when the turning judgment unit 21 has judged that the ship 1 will turn. In this case, since the responsiveness of the ship speed control is lowered, a fluctuation in the actual ship speed due to the ship speed control becomes smaller, so that the ship speed fluctuations during turning are suppressed.

The control change unit 22 provides, to the main engine controller 18, a command as to whether or not to perform the lowering processing (hereinafter, referred to as a "lowering processing command"). The lowering processing command is turned on when the lowering processing is performed and is turned off when the lowering processing is not performed. When the lowering processing command from the control change unit 22 is on, the main engine controller 18 changes the control mode. The control mode when the lowering processing is not performed is referred to as a normal mode, and the control mode when the lowering processing is performed is referred to as a lowering processing mode.

As an example of the lowering processing, a first process of stopping the response of the ship speed control or a second process of reducing the loop gain of the ship speed control can be employed. The first process is a process in which, when it is judged that the ship 1 will turn, the ship speed control is stopped, and control is performed such as to maintain the rotational frequency of the main engine 74 at the time of the judgment. In this process, when the lowering processing command from the control change unit 22 is on, the main engine controller 18 stops the response of the ship speed control. The first process is a process that does not change the rotational frequency of the main engine 74 even when the actual ship speed changes and the ship speed deviation from the target ship speed becomes large and that maintains the rotational frequency of the main engine 74 in the state before the actual ship speed changes. Therefore, even if the propulsion resistance changes due to rudder operation and hence the actual ship speed changes, the main engine controller 18 will not change the rotational frequency of the main engine 74, thereby significantly suppressing the ship speed fluctuations during turning.

The second process is a process of making the loop gain of the feedback control smaller than that before it is judged that the ship 1 will turn. In this process, a control parameter of the feedback control performed by the main engine controller 18 is changed to reduce the loop gain of the open-loop transfer function in the ship speed control. In the second process, when the lowering processing command from the control change unit 22 is on, the main engine controller 18 changes a control parameter of the feedback control to reduce the loop gain of the ship speed control. When the loop gain of the ship speed control is reduced by the second process, the change in the rotational frequency of the main engine 74 in response to a change in the actual ship speed becomes more gradual than in the normal mode. Accordingly, the actual ship speed follows the target ship speed more slowly, and the time required before the actual ship speed gets closer to the target ship speed becomes longer. Therefore, even if the propulsion resistance changes due to rudder operation and hence the actual ship speed changes, the main engine controller 18 can keep the change in the rotational frequency of the main engine 74 small, thereby suppressing the ship speed fluctuations during turning.

As an example of a method for the turning judgment, the turning judgment unit 21 can employ a first method of using the actual rudder angle for the judgment or a second method of using the actual ship position and a way point for the judgment. The turning judgment unit 21 may perform the turning judgment using a method other than the first and second methods.

In the first method, the turning judgment unit 21 judges turning of the ship 1 using the actual rudder angle detected by the rudder angle detector 31. For example, the turning judgment unit 21 may judge that the ship 1 will turn when the actual rudder angle exceeds a threshold R1. Based on the judgment by the turning judgment unit 21, the control change unit 22 performs the lowering processing.

When the turning is finished and the ship enters a straight-ahead state, it is desirable that the main engine controller 18 returns to the normal mode. Therefore, in the embodiment, when the turning judgment unit 21 has judged, during the lowering processing, that the turning of the ship 1 was finished, the control change unit 22 disables the lowering processing and returns the main engine controller 18 to the normal mode. The lowering processing can be disabled by turning off the lowering processing command. The turning judgment unit 21 can also judge the finish of the turning using the actual rudder angle.

As an example of the turning finish judgment, the turning judgment unit 21 may judge that the turning has been finished when the actual rudder angle becomes equal to or smaller than a predetermined value R2, which is smaller the threshold R1, during the lowering processing. By providing hysteresis between the predetermined value R2 and the threshold R1, hunting of the judgment result of the turning judgment unit 21 due to a fluctuation in the actual rudder angle can be avoided. When the turning judgment unit 21 has judged that the turning was finished, the control change unit 22 turns off the lowering processing command.

The second method will be described. The turning judgment unit 21 can judge whether or not the ship 1 will turn using the actual ship position of the ship 1 and a way point on the navigation plan of the ship 1. The actual ship position of the ship 1 can be acquired by the GPS receiver. When the ship 1 reaches an area near a way point, the automatic steering unit 25 changes the target rudder angle based on the next way point and turns the ship 1. Therefore, the turning judgment unit 21 may judge that the ship 1 will turn when the distance between the actual ship position and a way point becomes a predetermined distance or shorter.

The turning judgment unit 21 can also judge the finish of the turning using the actual ship position and a way point. For example, the turning judgment unit 21 may judge that the turning has been finished when the distance between the actual ship position and a way point becomes a predetermined distance or longer during the lowering processing.

If the start of the lowering processing is delayed, the ship speed fluctuations during turning may occur depending on the delayed time. Therefore, using the actual ship position, actual ship speed, and target ship speed of the ship 1 and a way point on the navigation plan, the turning judgment unit 21 estimates a scheduled time at which the ship 1 reaches the way point and can judge that the ship will turn a predetermined period of time before the scheduled time. The scheduled time can be calculated by adding, to the current time, the time obtained by dividing the distance between the actual ship position and the way point by the actual ship speed. In this case, since the lowering processing can be started before the turning operation, the ship speed fluctuations during turning can be avoided mostly.

As another example of the turning judgment, the turning judgment unit 21 may judge turning of the ship by further using disturbance information including at least one of the speed of a tidal current near the ship 1, the direction of a tidal current near the ship 1, the wind speed near the ship 1, or the wind direction near the ship 1. The disturbance information is detected by a disturbance detector 32 using known techniques. By considering the disturbance information in the turning judgment, the turning can be judged more accurately.

In the following, a modification of the lowering processing will be described. The above explanation describes an example in which the main engine controller 18 linearly changes the rotational frequency of the main engine 74 with respect to the ship speed deviation between the target ship speed and the actual ship speed; in the present modification, the main engine controller 18 changes the rotational frequency of the main engine 74 nonlinearly with respect to the ship speed deviation. More specifically, the main engine controller 18 changes the rotational frequency of the main engine 74 based on the result of quantizing the ship speed deviation between the target ship speed and the actual ship speed, from the start to the end of turning of the ship 1. That is, in the modification, the responsiveness of the ship speed control is lowered by performing control such that the rotational frequency of the main engine does not change unless the target ship speed and the actual ship speed fluctuate by a certain amount or more.

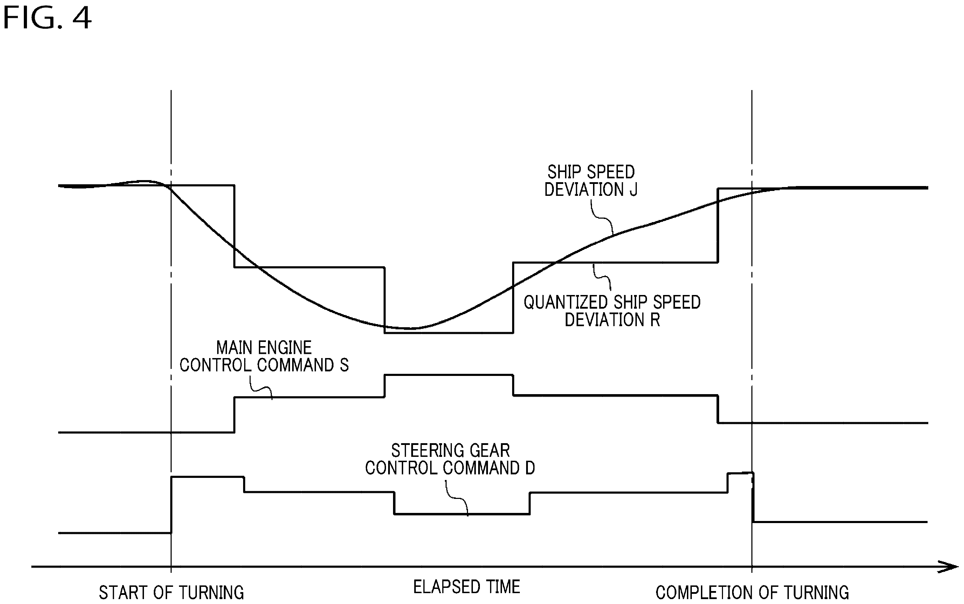

FIG. 4 is a timing chart that shows changes in ship speed in the modification. FIG. 4 shows an example of changing the rotational frequency of the main engine 74 based on the result of quantizing the ship speed deviation. In FIG. 4, the horizontal axis represents the elapsed time, and the vertical axis represents a ship speed deviation J, a quantized ship speed deviation R, a main engine control command S, and a steering gear control command D. The ship speed deviation J is the ship speed deviation between the target ship speed and the actual ship speed and continuously changes in a curved shape. The quantized ship speed deviation R is obtained by quantizing the ship speed deviation J through predetermined steps and changes discontinuously in a staircase-like manner. The main engine control command S is a command signal output by the main engine controller 18 to the main engine 74 and changes in a staircase-like manner in the opposite direction to the change in the quantized ship speed deviation R. The steering gear control command D is a command signal output by the steering controller 19 to the steering gear 76 and changes in a staircase-like manner in the same direction as the change in the quantized ship speed deviation R.

Thus, during turning, if the ship speed deviation J is within a predetermined range, no change will appear in the main engine control command S, so that fluctuations in the rotational frequency of the main engine 74 can be suppressed. Also, the frequency of correcting the rudder 77, which is the number of step-like changes in the steering gear control command D, can be reduced. As a result, frequent load fluctuations of the main engine 74 during turning can be suppressed, and an increase in fuel consumption can also be suppressed.

When the ship 1 is a large ship, there occurs a delay from when the rudder 77 is operated until when the influence on the actual ship speed appears. Accordingly, instead of the ship speed deviation J in the above modification, the target rudder angle may be used. The main engine controller 18 changes the rotational frequency of the main engine 74 nonlinearly with respect to the target rudder angle. More specifically, the main engine controller 18 may change the rotational frequency of the main engine 74 when a quantized target rudder angle, which is the result of quantizing the target rudder angle, exceeds a predetermined rudder angle, from the start to the end of turning of the ship 1. Accordingly, even if there is a delay from when the rudder 77 is operated until when the actual ship speed decreases, the rotational frequency of the main engine 74 can be increased before the start of turning, so that fluctuations in the main engine rotational frequency can be suppressed.

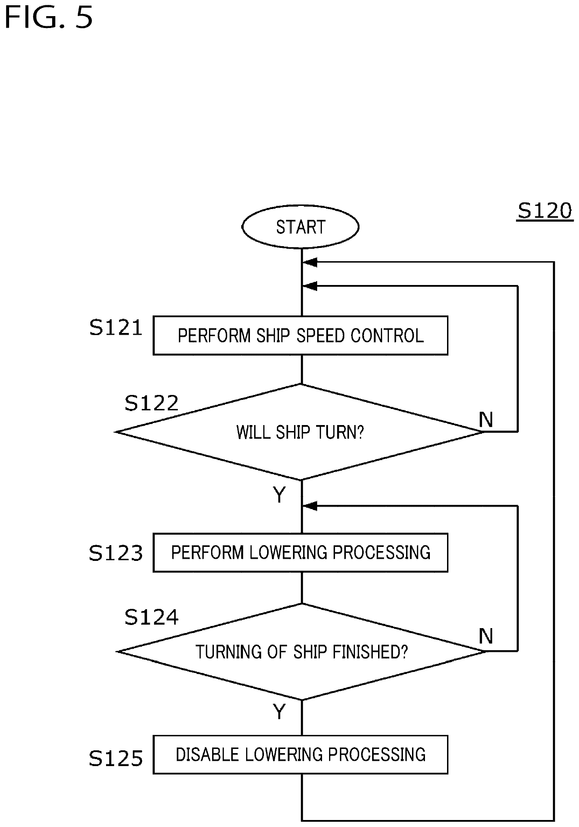

There will now be described an example of the operation performed by the ship control system 10 of the embodiment. FIG. 5 is a flowchart that shows an operation S120 of the ship control system 10. When the operation S120 is started, the ship control system 10 performs ship speed control for bringing the actual ship speed of the ship 1 closer to the target ship speed (Step S121).

Subsequently, the ship control system 10 judges whether or not the ship 1 will turn (Step S122). The turning judgment can be performed using the first method or the second method described above, for example.

When it is judged that the ship 1 will not turn (N at Step S122), the process returns to Step S121.

When it is judged that the ship 1 will turn (Y at Step S122), the ship control system 10 performs lowering processing (Step S123). The lowering processing can be performed using the first process or the second process described above, for example.

Thereafter, the ship control system 10 judges whether or not the turning of the ship 1 has been finished (Step S124). The turning finish judgment can be performed with the method of using the actual rudder angle or the method of using the actual ship position and a way point described above, for example.

When it is judged that the turning has not been finished (N at Step S124), the process returns to Step S123.

When it is judged that the turning has been finished (Y at Step S124), the ship control system 10 disables the lowering processing (Step S125). After the lowering processing is disabled, the process returns to Step S121.

The operation S120 may be performed repeatedly. The operation S120 is merely an example, and various modifications can be made.

The above is a description of the first embodiment.

There will now be described second and third embodiments of the present invention. In the drawings and description of the second and third embodiments, like reference characters denote like or corresponding constituting elements and members in the first embodiment. Repetitive description already provided in the first embodiment will be omitted as appropriate, and configurations different from those in the first embodiment will be intensively described.

### Second Embodiment

The second embodiment of the present invention relates to a control method for the ship control system 10. This method includes: performing, when controlling the rotational frequency of the main engine 74 based on a target ship speed of the ship 1, feedback control of the actual ship speed of the ship 1 to perform ship speed control for bringing the actual ship speed closer to the target ship speed (Step S121); judging whether or not the ship 1 will turn (Step S122); and performing, when it is judged that the ship 1 will turn in the judging, lowering processing for lowering the responsiveness of the ship speed control (Step S123) .

The second embodiment provides functions and effects similar to those of the first embodiment.

### Third Embodiment

The third embodiment of the present invention relates to a control program P100 (computer program) for the ship control system 10. This program P100 causes a computer to execute: performing, when controlling the rotational frequency of the main engine 74 based on a target ship speed of the ship 1, feedback control of the actual ship speed of the ship 1 to perform ship speed control for bringing the actual ship speed closer to the target ship speed (Step S121); judging whether or not the ship 1 will turn (Step S122); and performing, when it is judged that the ship 1 will turn in the judging, lowering processing for lowering the responsiveness of the ship speed control (Step S123).

These functions of the program P100 may be installed as an application program provided with multiple modules corresponding to functional blocks in the information processing unit 12, on a storage (e.g., the storage unit 29) of the information processing unit 12. The program P100 may be read into the main memory of a processor (e.g., CPU) of a computer incorporated in the information processing unit 12 and executed.

The third embodiment provides functions and effects similar to those of the first embodiment.

Exemplary embodiments of the present invention have been described in detail. Each of the abovementioned embodiments merely describes a specific example for carrying out the present invention. The embodiments are not intended to limit the technical scope of the present invention, and various design modifications, including changes, addition, and deletion of constituting elements, may be made to the embodiments without departing from the spirit of the invention defined in the claims. In the aforementioned embodiments, matters to which design modifications may be made are described with the expression of "of the embodiment", "in the embodiment", or the like. However, it is not unallowable to make a design modification to a matter without such expression.

### Modifications

In the following, modifications will be described. In the drawings and description of the modifications, like reference characters denote like or corresponding constituting elements and members in the embodiments. Repetitive description already provided in the embodiments will be omitted as appropriate, and configurations different from those in the embodiments will be intensively described.

Although an embodiment describes an example in which the navigation planning device 50 is provided on land, the present invention is not limited thereto. For example, the navigation planning device may be provided on another ship, a flying object, or the like.

Although an embodiment describes an example in which the actual ship speed is acquired by differentiating a change in the actual ship position of the ship 1 with respect to time, the present invention is not limited thereto. For example, a ship speed sensor for detecting the actual ship speed of a ship may be provided, and the actual ship speed may be acquired using the detection result of the ship speed sensor.

Although an embodiment describes an example in which the main engine 74 rotates the propeller 75 to obtain propulsion, the present invention is not limited thereto. The mechanism for obtaining propulsion has only to be capable of propelling the ship and may be, for example, a configuration in which gas or the like is discharged based on the rotation of the main engine 74, and propulsion is obtained by means of the reaction force of the gas or the like.

Although an embodiment describes an example in which the main engine 74 is a diesel engine, the present invention is not limited thereto. For example, the main engine may be an internal combustion engine other than a diesel engine, or an external combustion engine.

The abovementioned modifications provide functions and effects similar to those of the embodiments.

Optional combinations of the aforementioned embodiments and modifications may also be practiced as additional embodiments of the present invention. Such an additional embodiment made by combination has the effect of each of the combined embodiments and modifications.

## Claims

1. A ship control system (10), comprising:
a main engine controller (18) that performs, when controlling the rotational frequency of a main engine (74) based on a target ship speed of a ship (1), feedback control of an actual ship speed of the ship (1) to perform ship speed control for bringing the actual ship speed closer to the target ship speed;
a turning judgment unit (21) that judges whether or not the ship (1) will turn; and
a control change unit (22) that performs, when the turning judgment unit (21) has judged that the ship (1) will turn, lowering processing for lowering the responsiveness of the ship speed control.

2. The ship control system (10) according to claim 1, wherein, in the lowering processing, when it is judged that the ship (1) will turn, the ship speed control is stopped, and control is performed such as to maintain the rotational frequency of the main engine (74) at the time of the judgment.

3. The ship control system (10) according to claim 1, wherein, in the lowering processing, loop gain of the feedback control is made smaller than that before it is judged that the ship (1) will turn.

4. The ship control system (10) according to claim 1, wherein the turning judgment unit (21) judges whether or not the ship (1) will turn using an actual rudder angle of the ship (1).

5. The ship control system (10) according to claim 4, wherein, when the actual rudder angle of the ship (1) becomes equal to or smaller than a predetermined value during the lowering processing, the turning judgment unit (21) judges that the turning of the ship (1) has been finished.

6. The ship control system (10) according to claim 4, wherein the turning judgment unit (21) judges turning of the ship (1) further using disturbance information including at least one of the speed of a tidal current near the ship (1), the direction of a tidal current near the ship (1), the wind speed near the ship (1), or the wind direction near the ship (1) .

7. The ship control system according to claim 1, wherein, when the turning judgment unit (21) has judged, during the lowering processing, that turning of the ship (1) was finished, the control change unit (22) disables the lowering processing.

8. The ship control system (10) according to claim 1, wherein the turning judgment unit (21) judges whether or not the ship (1) will turn using an actual ship position of the ship (1) and a way point on a navigation plan of the ship (1).

9. The ship control system (10) according to claim 1, wherein, using an actual ship position, the actual ship speed, and the target ship speed of the ship (1) and a way point on a navigation plan of the ship (1), the turning judgment unit (21) estimates a scheduled time at which the ship (1) reaches the way point and judges that the ship (1) will turn a predetermined period of time before the scheduled time.

10. A control method for a ship control system (10), the control method comprising:
performing, when controlling the rotational frequency of a main engine (74) based on a target ship speed of a ship (1), feedback control of an actual ship speed of the ship (1) to perform ship speed control for bringing the actual ship speed closer to the target ship speed;
judging whether or not the ship (1) will turn; and
performing, when it is judged that the ship (1) will turn in the judging, lowering processing for lowering the responsiveness of the ship speed control.

11. A control program for a ship control system (10), the control program causing a computer to execute:
performing, when controlling the rotational frequency of a main engine (74) based on a target ship speed of a ship (1), feedback control of an actual ship speed of the ship (1) to perform ship speed control for bringing the actual ship speed closer to the target ship speed;
judging whether or not the ship (1) will turn; and
performing, when it is judged that the ship (1) will turn in the judging, lowering processing for lowering the responsiveness of the ship speed control.
